Europäisches Patentamt

European Patent Office

Office européen des brevets

(11) Publication number: **0 224 974**
**A2**

## (12) EUROPEAN PATENT APPLICATION

(21) Application number: 86302475.8

(22) Date of filing: 03.04.86

(51) Int. Cl.⁴: **A47C 7/26** , //A47C7/20

(30) Priority: 25.11.85 US 801530

(43) Date of publication of application:
10.06.87 Bulletin 87/24

(84) Designated Contracting States:
AT BE CH DE FR GB IT LI LU NL SE

(71) Applicant: **Wickes Manufacturing Company**
**26261 Evergreen Road**
**Southfield Michigan 48076(US)**

(72) Inventor: **Cojocari, Brian S.**
**18257 Ash Creek**
**Mt. Clemens Michigan 48044(US)**
Inventor: **Shivers, Joseph R.**
**20045 St. Francis**
**Livonia Michigan 48152(US)**

(74) Representative: **Sommerville, John Henry et al**
**SOMMERVILLE & RUSHTON 11 Holywell Hill**
**St. Albans Hertfordshire, AL1 1EZ(GB)**

(54) Seat construction.

(57) A self-contained and self-supporting wire suspension system is provided for use within a seat construction. The system includes a pair of parallel bolster wires, a set of parallel stringer wires wrapped around the bolster wires, and a pair of parallel border wires secured to the free ends of the stringer wires. The system includes a top portion defined by the segments of the stringer wires which extend between the bolster wires. The top portion is resiliently supported by at least one leg portion defined by stringer wire segments extending between the at least one set of bolster and border wires. The border wires are secured to a support surface. Lateral support members extend diagonally between the leg portions to provide stability. The stringer wires may be embedded within a plastic foam seat cushion.

FIG. 1

# SEAT CONSTRUCTION

## Background of the Invention

### 1. Field of the Invention.

The field of the invention relates to seat constructions for motor vehicle seats and the like.

### 2. Brief Description of the Prior Art.

Supporting spring structures for seating assemblies have commonly included load-bearing wires supported by spring elements or the like. U.S. Patent No. 3,639,002, which is incorporated by reference herein, discloses such a structure. A plurality of transversely extending wires are each double wrapped about a pair of parallel, longitudinally extending wires. Free ends of the transversely extending wires extend beyond the longitudinal wires at an angle with respect to the plane defined thereby. An additional wire connects the free ends. The entire assembly may be supported by a cantilevered spring structure and embedded in foam.

U.S. Patent Nos. 2,934,133, 3,248,745 and 4,325,542 are representative of other spring seat constructions known to the art. The construction disclosed in the latter patent has the advantage of inherently retaining its assembly to a seat frame without requiring additional components for installation or support.

## SUMMARY OF THE INVENTION

A self-contained seat suspension unit is provided which is easily installed, requires only a flat mounting surface, and is stable in all types of seat frames. The unit includes a plurality of stringer wires which run substantially parallel to each other. The stringer wires are wrapped about at least one pair of bolster wires and have free ends secured to border wires. Means are provided for stabilizing the unit. In a preferred embodiment of the invention, the stabilizing means include cross wires extending between a bolster wire on one side of the unit and a border wire on the opposite side thereof.

When incorporated within a seat construction, the border wires are secured to a seat frame or a flat mounting surface with tabs extending therefrom. The border wires may extend well beyond the stringer wires to provide additional mounting support areas. Bends may be formed therein to prevent movement of the unit in any direction with respect to the mounting surface.

## BRIEF DESCRIPTION OF THE DRAWINGS

Fig. 1 is a partially cutaway perspective view of a seat construction according to the invention;

Fig. 2 is a partially cutaway perspective view of a seat construction according to a second embodiment of the invention;

Fig. 3 is a perspective view of a wire frame, a portion of which is shown in Fig. 1;

Fig. 4 is a front elevation view of said wire frame;

Fig. 5 is a top plan view of a cross member utilized in said frame;

Fig. 6 is a front elevation view of an alternative embodiment of a wire frame in accordance with the invention; and

Fig. 7 is a front elevation view of another alternative embodiment of a wire frame in accordance with the invention.

## DETAILED DESCRIPTION OF THE INVENTION

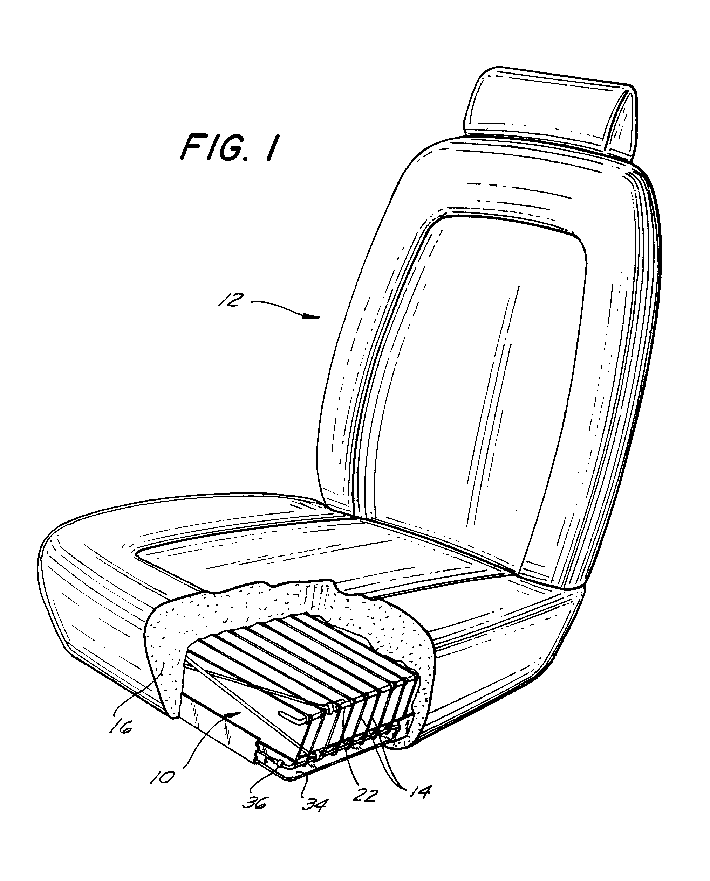

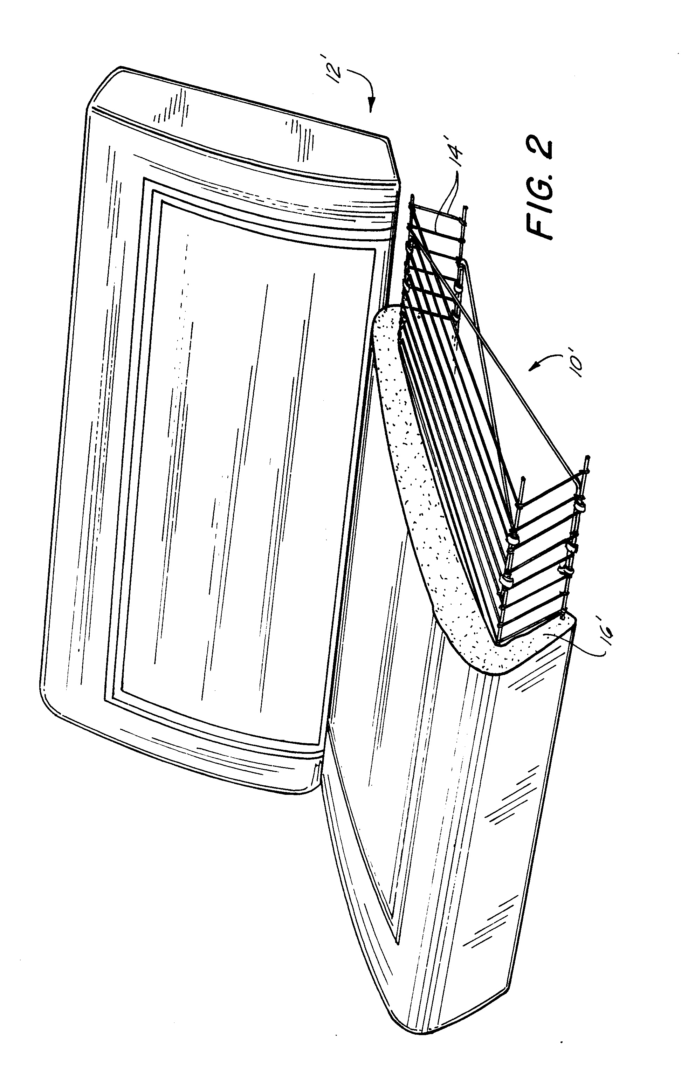

Figs. 1 and 2 illustrate bucket and bench type motor vehicle seat constructions which include self-contained and self-supporting suspension systems as discussed hereinafter. The suspension system 10 employed within the bucket seat 12 includes a plurality of parallel stringer wires 14 extending laterally with respect to the seat. In contrast, the stringer wires 14' of the suspension system 10' shown in Fig. 2 extend longitudinally with respect thereto. The terms longitudinal and lateral as employed hereinafter are accordingly used in their relative rather than absolute sense. Both suspension systems are embedded within the plastic foam seat portions 16, 16' of the bucket 12 and bench 12' seats, respectively.

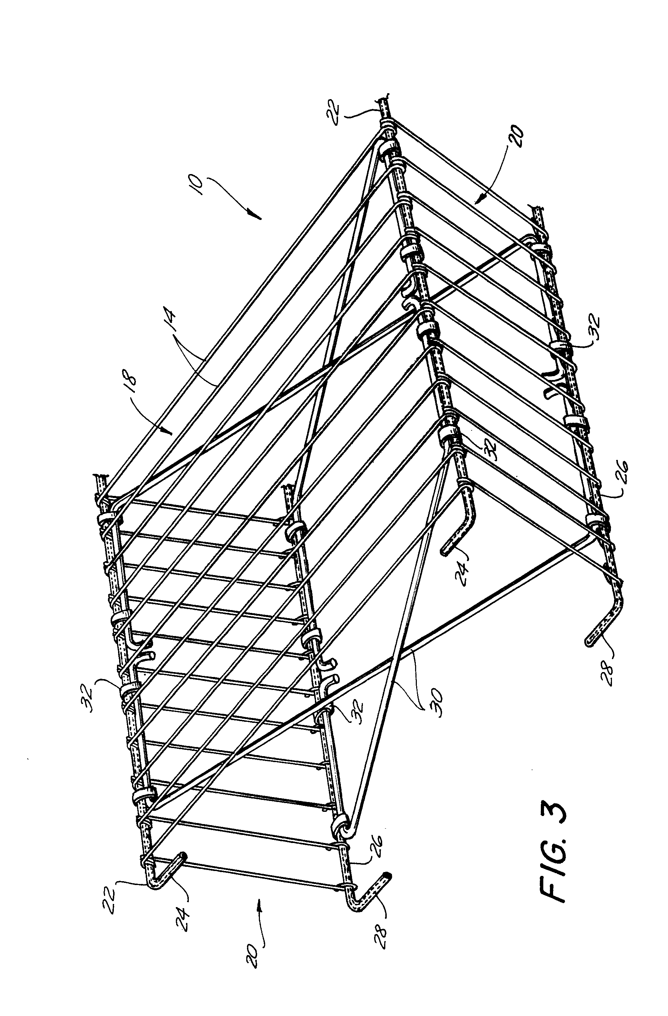

Referring now to Fig. 3, the suspension system 10 includes a top portion 18 defined by the intermediate portions of the stringer wires 14 and two supporting leg portions 20 defined by the free end portions of said wires. Each stringer wire is double wrapped about a pair of parallel bolster wires 22, the ends 24 of said bolster wires being bent inwardly at right angles. As discussed hereinafter, the warp is considerably wider than that used in previous constructions. The free ends of the stringer wires 14 are each single wrapped about a pair of border wires 26, the ends 28 of which are also bent inwardly at a selected angle. Each of the bolster and border wires may include a paperwrapping or preferably an extruded coating of high density polyethylene to reduce friction and eliminate noise. All of the wires used in the system are oil tempered wires to provide the desired resilience.

Because the system 10 is intended to be self-supporting, the stringer wires 14 are constructed from thirteen gauge wires (ASTM standards) to provide the required stability and resilience. Fourteen gauge wires, as employed in the construction disclosed in U.S. Patent No. 3,639,002, fail to provide adequate support. Twelve gauge wire is too stiff for the intended application and could possibly be felt through the seat in the absence of an insulator. Since an object of the invention is to provide seating comfort while also minimizing the number of parts, the weight, and the cost of the seat construction, stringer wires much heavier than thirteen gauge would not be suitable. The border and bolster wires are each made from twelve gauge wire. The plastic coating about the bolster wires is considerably thicker than that about the border wires due to the relatively wide double wrapping of the stringer wires thereabout. A coating of about 0.07 inches has been successfully employed.

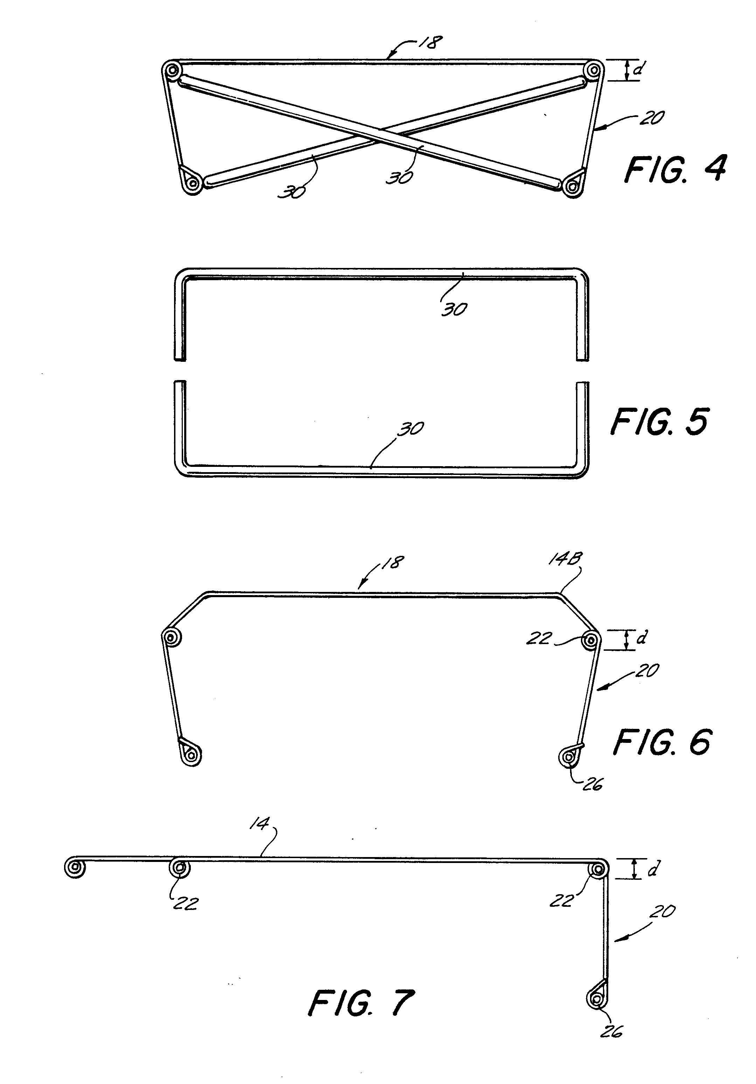

Lateral support means may also be provided to maintain the system in the desired configuration without compromising seating comfort. While this may be accomplished in a number of ways, cross members 30 as shown in Fig. 5 have been found to accomplish the basic object of resiliently maintaining the system in the configuration shown in Fig. 3. The number of cross members employed depends on the stability required for the system 10 as well as the size thereof. More will be required for a bench seat than a bucket seat assuming the same stability is desired for both. In the embodiments of the invention disclosed herein, the cross members are made from wire having about twice the diameter of the stringer wires.

Each cross member is constructed from a wire of selected gauge which is bent into a substantially U-shaped configuration as shown in Fig. 5. The opposing ends of the cross members are stapled respectively to a bolster wire 22 on one side of the system 10 (using staples 32) and to the diagonally opposing border wire 26. The ends of the wires defining the cross members may be bent inwardly (not shown) to insure they do not slip through the staples.

The suspension system 10 may be assembled to a frame 34 or any flat surface by metal fasteners or tabs 36 which are bent over selected portions of the border wires. The inwardly bent ends 28 of the wires are clamped to prevent longitudinal displacement of the system 10 within the bucket seat 12. Lateral displacement is prevented by affixing the longer portions of the border wires to the frame 34.

As shown in Fig. 4, the system may be symmetrical in construction with each leg portion 20 extending at an acute angle from the plane defined by the top portion 18. Symmetrical cross members 30 are provided in the front and rear portions thereof. In the alternative embodiment of the invention shown in Fig. 6, the stringer wires 14 include a pair of symmetrical bends 14A therein which elevate the top portion 18B of the system with respect to the bolster wires 22. This construction provides somewhat greater resiliency than where the top portion is entirely flat.

Depending upon the configuration of the seat in which the suspension system is to be installed, the opposing border and bolster wires may or may not run parallel to each other. The leg portions 20 need not both be oriented at the same angle with respect to the top portion 18, and in some applications (as shown in Fig. 7) one of the leg portions may be coplanar therewith. The stringer wires are spaced at equal intervals for virtually all applications, the distances varying between one and two and one-half inches depending upon the support which is required.

Since the system must be able to support considerable weight and pass rigourous cycle testing involving repeated applications of a load, it is important for the areas subject to the most stress to be sufficiently durable. The double wrapping of the stringer wires about the bolster wires is sufficiently wide that it has such durability. In a preferred embodiment of the invention, the outside diameter of the wrapping was 0.43 inches. This is substantially wider than the 0.32 inch wrapping in structures as shown in the forementioned U.S. Patent 3,639,002. Tests indicated the tighter wrapping would result in snapped stringer wires after repeated load applications. Using the preferred thirteen gauge wires, the outside diameter d of the double wrappings about the bolster wires should be at least about 0.37 inches. The coated bolster wires have sufficient diameters such that the stringer wires are wrapped fairly snugly thereabout.

It will be appreciated by those skilled in the art that the suspension system provided herein has many applications and can be adapted for use in many types of vehicle seats. The leg portions may be oriented in the same or opposite directions with respect to the top portion and can be of the same or different lengths. While neither twelve nor fourteen gauge wire has been found to be suitable for the system, the wire may be somewhat lighter or heavier than thirteen gauge and still provide adequate performance. It would also be possible to include, in alternating sequence or otherwise, stringer wires of various gauges with the preferred thirteen gauge wire.

## Claims

1. A self-contained, self-supporting and resilient suspension system for a seat construction comprising:
a pair of longitudinally extending bolster wires;
a plurality of laterally extending stringer wires, said stringer wires being made from oil tempered, thirteen gauge wire, said stringer wires being double wrapped about said longitudinally extending bolster wires to define a top portion extending between said longitudinally extending bolster wires and a pair of leg portions extending therefrom, the outside diameter of said double wrapping of said stringer wires about said bolster wires being at least 0.37 inches, said stringer wires having free ends defining said leg portions;
a pair of longitudinally extending border wires, each of said free ends of said stringer wires being secured to one of said pair of border wires.

2. A seat construction system comprising:
a self-contained, self-supporting and resilient suspension system, said system including a pair of longitudinally extending bolster wires, a plurality of laterally extending, oil-tempered, thirteen gauge stringer wires double wrapped about said bolster wires to define a top portion extending between said bolster wires and a pair of leg portions extending therefrom, said stringer wires having free ends defining said leg portions, the outside diameter of said stringer wires as wrapped about said bolster wires being at least 0.37 inches;
a pair of longitudinally extending border wires, each of said free ends of said stringer wires being secured to one of said pair of border wires, said border wires defining a base of said system;
a support surface;
means for securing at least one of said border wires to support surface such that at least one of said leg portions resiliently supports said top portion; and
a seat cushion secured to said suspension system.

3. A system as defined in claim 1 or 2 including means for laterally stabilizing said leg portions and said top portion.

4. A system as defined in claim 1, 2 or 3 wherein said bolster wires are made from oil tempered, twelve gauge wire.

5. A system as defined in claim 1, 2, 3 or 4 wherein said bolster wires each include a plastic coating, said stringer wires being tightly double wrapped about said plastic coating.

6. A system as defined in any preceding claim wherein said means for laterally stabilizing said leg portions and said top portions includes a plurality of cross members extending diagonally between said leg portions.

7. A system as defined in claim 6 wherein at least one of said cross members is a wire bent into a substantially U-shaped configuration having a pair of opposing ends, one of said ends being secured to one of said bolster wires defining a top of one of said leg portions and its opposing end being secured to one of said border wires defining a base of the other of said leg portions.

8. A system as defined in any preceding claim wherein each of said border wires includes a free end extending substantially beyond each leg portion and including a bend therein.

9. A seat construction as defined in claim 2 wherein said stringer wires are at least partially embedded within said seat cushion.

FIG. 1

FIG. 2

FIG. 3

FIG. 4

FIG. 5

FIG. 6

FIG. 7